# FASCICULE DE BREVET EUROPEEN

(11) **EP 1 707 304 B1**
(45) Date de publication et mention de la délivrance du brevet: **03.02.2016**
(21) Numéro de dépôt: 06300169.7
(22) Date de dépôt: 28.02.2006
(51) Int. Cl.: B23K 35/362, B23K 35/36, B23K 25/00, B23K 1/20

(54) **Flux à haute productivité pour plaquage electroslag**
Fluss mit hoher Produktivität für Elektroslagüberzug
Flux with high productivity for electroslag plating

(30) Priorité: 29.03.2005 FR 0550800
(43) Date de publication de la demande: 04.10.2006
(73) Titulaire: AIR LIQUIDE WELDING FRANCE, 75007 Paris (FR)
(72) Inventeur: BOUILLOT, Claude, 78150, TRIEL SUR SEINE (FR); LEDUEY, Bruno, 95000, CERGY (FR); ROUAULT, Philippe, 78300, POISSY (FR)
(74) Mandataire: Pittis, Olivier

(56) Documents cités:
- FR-A- 2 234 086
- GB-A- 1 507 461
- US-A- 4 841 116
- US-A- 5 308 407
- PATENT ABSTRACTS OF JAPAN vol. 008, no. 210 (M-328), 26 septembre 1984 (1984-09-26) & JP 59 097793 A (SHIN NIPPON SEITETSU KK), 5 juin 1984 (1984-06-05)
- PATENT ABSTRACTS OF JAPAN vol. 008, no. 100 (M-295), 11 mai 1984 (1984-05-11) & JP 59 013593 A (SHIN NIPPON SEITETSU KK), 24 janvier 1984 (1984-01-24)
- PATENT ABSTRACTS OF JAPAN vol. 006, no. 207 (M-165), 19 octobre 1982 (1982-10-19) & JP 57 112991 A (SHIN NIPPON SEITETSU KK), 14 juillet 1982 (1982-07-14)
- PATENT ABSTRACTS OF JAPAN vol. 006, no. 142 (M-146), 31 juillet 1982 (1982-07-31) & JP 57 064496 A (NIPPON STEEL CORP), 19 avril 1982 (1982-04-19)

## Description

La présente invention concerne un flux pour plaquage de type « electroslag » permettant d'augmenter la vitesse de plaquage et donc la productivité du procédé de plaquage « electroslag » utilisant ce flux, un tel procédé de plaquage « electroslag », ainsi qu'un procédé de fabrication dudit flux.

Le plaquage est un procédé par lequel un matériau avec des propriétés particulières est déposé sur un métal de base, le plus souvent un acier au carbone ou un acier faiblement allié.

Le métal de base a pour fonction principale d'apporter la résistance mécanique nécessaire pour supporter les contraintes liées aux conditions d'utilisation de l'appareillage.

Le plaquage a pour objectif d'améliorer les propriétés de la surface comme la résistance à la corrosion ou à l'érosion, comparativement au métal de base.

Le plaquage est utilisé entre autre dans la fabrication des réservoirs sous pression de forte épaisseur. En effet, le plaquage est une solution économique face à l'augmentation du volume de ces équipements et les conditions de fonctionnement de plus en plus sévères. Le plaquage est assimilable à un composite avec un matériau économique qui assure la solidité de la structure et un matériau noble qui assure la protection de la surface en contact avec un milieu agressif.

Le plaquage est possible par différents procédés dont les plus connus sont le co-laminage, l'explosion et le soudage.

De tous les procédés de plaquage actuellement utilisés dans l'industrie, le procédé de plaquage ou soudage « electroslag » avec feuillard est celui qui permet la plus grande productivité avec des caractéristiques satisfaisantes du dépôt tout en utilisant un matériel relativement peu sophistiqué. De plus, il est particulièrement flexible et utilisable pour une large gamme d'applications

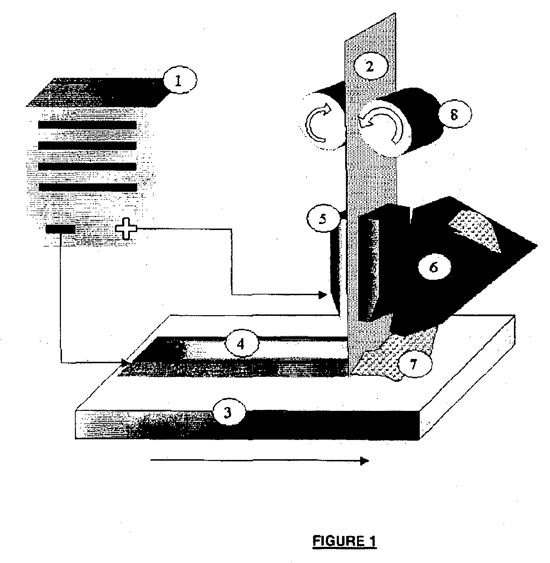

Comme illustré sur la Figure 1, le procédé de plaquage de type « electroslag » met en oeuvre un feuillard 2 mince ou fil plat fusible alimenté par un système d'entraînement à galets 8. Le feuillard 2 est guidé par des patins 5 de cuivre de largeur égale à celle du feuillard par lesquels passe le courant de soudage délivré par une source de courant 1. Le passage du courant entre le feuillard 2 et le métal de base 3 est assuré par un laitier fondu électro-conducteur (electroslag). C'est l'effet Joule produit par le passage du courant qui conduit à la fusion du feuillard 2, du métal de base 3 et du flux granulaire 7 ou particulaire. La fusion de ce flux 7 donne un laitier électro-conducteur qui entretient le procédé dans le mode dit « electroslag », sans génération d'arc électrique. Le flux granulé 7 ou particulaire est déposé (en 6) uniquement contre la face avant du feuillard 2. Par conséquent, à l'arrière du feuillard, le laitier fondu 4 est visible.

Ce procédé est particulièrement simple à mettre en oeuvre puisqu'il requiert le même équipement que le procédé de soudage à l'arc submergé avec feuillard.

De plus, le procédé « electroslag » étant entièrement automatique, la constance des paramètres du procédé garantie l'homogénéité des caractéristiques du dépôt.

En outre, le procédé « electroslag » permet d'augmenter la productivité en offrant un taux de dépôt supérieur et une dilution réduite comparativement au procédé de soudage à l'arc submergé. En effet, la dilution ainsi obtenu, correspondant à la proportion de substrat ou métal de base dans la couche de plaquage, permet de réduire le nombre de couche de plaquage et la quantité de métal déposé nécessaire pour obtenir une analyse chimique du dépôt conforme aux applications, et l'absence d'arc favorise la stabilité du procédé et diminue le risque de défauts comme les inclusions de laitier.

Ce procédé est utilisé dans les industries sidérurgique et mécanique pour réaliser des dépôts d'alliages cobalt-chrome et dans les industries chimiques, pétrolières et nucléaires pour opérer des dépôts d'aciers inoxydables et d'alliages base nickel.

Les dépôts ainsi obtenus doivent être conformes aux spécifications imposées par les codes et les particularités liées aux applications des clients. La composition chimique du dépôt doit être équivalente à celle de la nuance de matériau sélectionné pour l'application et posséder des caractéristiques de résistance à la corrosion conformes aux spécifications. Les caractéristiques mécaniques doivent être conforme à la nature des sollicitations de la structure. La conformité du métal déposé est généralement validée par des essais de corrosion, des mesures de dureté et des essais de pliages.

Techniquement, ce procédé est utilisable avec des feuillards de 30 mm à 180 mm de largeur. Généralement, un dispositif de contrôle magnétique du bain de fusion est ajouté à l'installation pour agir sur l'étalement du cordon et par conséquent sur le raccordement avec le métal de base.

L'augmentation de la productivité du procédé de plaquage electroslag avec feuillard est un axe essentiel de développement de cette technologie. Par conséquent, l'augmentation de la vitesse de plaquage doit avoir une incidence directe sur les coûts de fabrication en relation avec la main d'oeuvre.

Par exemple, ce procédé est utilisé dans l'industrie pétrochimique pour le revêtement des appareillages devant résister à la corrosion. Pour ce type d'application, le plaquage est souvent réalisé avec du feuillard base nickel de type Inconel 625. Actuellement, pour obtenir un dépôt dont la composition chimique est conforme au code AWS 5.14 ERNiCrMo-3, il faut réaliser deux couches de plaquage. Avec un feuillard de type Inconel 625 de 60 mm de largeur, la vitesse de plaquage est de l'ordre de 20 cm/min en mettant en oeuvre une intensité de courant de l'ordre de 800 à 900 A, soit une épaisseur d'environ 3 mm pour chaque couche.

En outre, les documents JP-A-59097793, JP-A-59013593, JP-A-57112991 et JP-A-57064496 enseignent différentes compositions de flux de plaquage à base de CaF₂ et de rutile.

Cependant, les flux de plaquage « electroslag » connus utilisés pour cette application ne permettent pas de dépasser une vitesse de soudage/plaquage de 15 à 20 cm/min et ce, même si l'on augmente proportionnellement le courant de soudage.

En effet, au-delà de 20 cm/min, le comportement « electroslag » devient instable, cette instabilité étant souvent liée à l'entraînement du laitier par le feuillard et se traduisant alors généralement par le passage du mode « electroslag » au mode « arc submergé » avec la production de projection et l'apparition d'un arc électrique visible. L'arc devient visible car il n'y a pas de flux de couverture sur la face arrière du feuillard dans le procédé « electroslag ».

Autrement dit, le problème qui se pose est qu'actuellement, les flux de plaquage « electroslag » de l'art antérieur ne permettent pas de dépasser une vitesse de plaquage de 20 cm/min sans engendrer des problème d'instabilité, notamment des projections et un arc visible. Or, ceci a aussi un impact négatif direct sur la productivité du procédé puisque l'augmentation de la vitesse de plaquage permet d'augmenter la productivité.

La présente invention vise donc à résoudre ces problèmes, c'est-à-dire de proposer une solution permettant d'augmenter la vitesse de plaquage et donc la productivité du procédé « electroslag » sans engendrer les problèmes d'instabilité rencontrés avec les flux connus.

La solution de l'invention est alors un flux particulaire pour plaquage « electroslag », caractérisé en ce qu'il comprend de 20 à 42% de fluor (F) et de 1 à 20 % en poids de rutile (TiO₂) ou de 0,5 à 12 % de titane (Ti), et en ce qu'il présente une granulométrie telle qu'au moins 20 % des particules constituant le flux ont une taille inférieure à 400 µm, ce qui correspond à un refus cumulé d'au plus 80%.

Selon le cas, le flux de l'invention peut comprendre l'une ou plusieurs des caractéristiques suivantes :
- il comprend, en outre, de 25 à 40% de F, de 2.5 à 15 % de Al, de 0.5 à 8 % de Si et de 25 à 42% de Ca (% en poids).
- il comprend de 5 à 12 % en poids de Al, de 2 à 6 % de Si et de 28 à 38 % de Ca(% en poids).
- il comprend de 2 à 15 % de TiO₂, de préférence plus de 3 % de TiO₂.
- il comprend, en outre, moins de 3 % d'un ou plusieurs éléments choisis parmi Na, K et Li.
- il présente une granulométrie telle qu'au moins 30 % des particules constituant le flux ont une taille inférieure à 400 µm, de préférence de 35 à 75 % des particules constituant le flux ont une taille inférieure à 400 µm.
- il présente une granulométrie telle qu'au moins 5 % des particules constituant le flux ont une taille inférieure à 250 µm, ce qui correspond à un refus cumulé d'au plus 95%, de préférence au moins 15% des particules constituant le flux ont une taille inférieure à 250 µm, de préférence encore de 25 à 50 % des particules constituant le flux ont une taille inférieure à 250 µm.
- il présente une granulométrie telle qu'au moins 70 % des particules constituant le flux ont une taille inférieure à 800 µm, ce qui correspond à un refus cumulé d'au plus 30%.

L'invention porte aussi sur un procédé de plaquage à l'arc de type « electroslag » mettant en oeuvre un feuillard d'apport et un flux de plaquage selon l'invention. Ce procédé est mis en oeuvre à une vitesse de plaquage d'au moins 25 cm/min, de préférence d'au moins 30 cm/min.

L'invention concerne aussi un procédé de fabrication d'un flux selon l'invention, comprenant une étape de granulation en phase humide, durant laquelle on mélange un liant contenant au moins un silicate à l'état liquide avec au moins une matière pulvérulente de manière à former des particules de flux agglomérées, caractérisé en ce qu'on utilise une quantité de liant inférieure à 175 g/kg de matière pulvérulente, de préférence inférieure à 160 g/kg de matière pulvérulente, de préférence encore de l'ordre de 150 g/kg de matière pulvérulente.

Selon le cas, le procédé de fabrication de l'invention peut comprendre l'une ou plusieurs des caractéristiques suivantes :
- la matière pulvérulente contient de 1 à 20 % en poids de rutile (TiO₂).
- il comporte, en outre une étape d'agglomération des matières pulvérulentes avec du de manière à former des particules de flux agglomérées, et une étape de tamisage desdites particules de flux agglomérées de manière à obtenir un flux présentant une répartition granulométrique telle qu'au moins 20 % des particules constituant ledit flux ont une taille inférieure à 400 µm.

Comme il ressortira clairement des exemples ci-après, les inventeurs de la présente invention ont montré que pour pouvoir augmenter la vitesse de plaquage, il fallait non seulement prendre en compte la composition chimique du flux de plaquage mais aussi la granulométrie du flux.

### Exemples

En s'attachant à la résolution du problème susmentionné, les inventeurs de la présente invention ont mis en évidence que la composition chimique du flux de plaquage avait une grande importance et que, tout particulièrement, un ajout de titane sous la forme de rutile en poudre à la formulation d'un flux de plaquage « electroslag » conduisait à une augmentation de la vitesse de plaquage, au-delà de 20 cm/min.

Le Tableau 1 ci-après donne les conditions et résultats d'essais comparatifs réalisés avec un flux selon l'art antérieur sans titane (Flux A) et d'un flux selon l'invention avec addition de titane sous forme de rutile, i.e. TiO₂ (Flux B). Les flux A et B ont été testés en plaquage electroslag avec un feuillard base nickel de type Inconel 625 dans les conditions du Tableau 1. Comme on le voit, avec le flux A, la vitesse de plaquage maximale obtenue est inférieure à 20 cm/min, alors qu'avec le flux B, une vitesse de plaquage de l'ordre de 25 cm/min a été atteinte, avec le même feuillard. Or, du point de vue de sa formulation, le flux B ne se différencie notablement du flux A que par l'addition de rutile (TiO₂).

**Tableau 1**

| | Flux A | Flux B |
|---|---|---|
| | (% en poids) | (% en poids) |
| Na₂O | 1.2 | 1.1 |
| Fe₂O₃ | 0.3 | 0.8 |
| **TiO₂** | **0** | **3.1** |
| CaOtotal | 46.8 | 45.3 |
| SiO₂ | 5.7 | 6.9 |
| K₂O | 0 | 0 |
| P₂O₅ | 0.0 | 0.0 |
| Al₂O₃ | 19.1 | 14.7 |
| F | 26.8 | 27.9 |
| Granulométrie du flux (en mm) | Entre 0.3 et 1.4 | |
| Application plaquage | ER-NiCrMo-3 en 2 couches | |
| Feuillard (en mm) | 60 X 0.5 | |
| Type | Inconel 625 | |
| Courant (en A) | 800à 900 | 1200 à 1300 |
| Vitesse maximale (cm/min) | **< 20** | **25** |

On constate donc que l'addition de rutile au flux B de plaquage permet une augmentation de 25% de la vitesse de plaquage par rapport à un flux classique (flux A).

Il est à noter que le flux A conduit à la même vitesse maximale de 20 cm/min, en augmentant l'intensité du courant au delà de 1200 A car avec ce type de flux, la vitesse de soudage maximale est limitée quelle que soit l'intensité du courant apportée.

Les inventeurs de l'invention ont ensuite cherché à augmenter encore cette vitesse maximale de plaquage en étudiant l'effet d'une modification de la granulométrie du flux.

En effet, usuellement, une plage de granulométrie à respecter est spécifiée lors de la fabrication des flux de plaquage en fonction du type d'application visée. Ainsi, en général, les flux de plaquage « electroslag » sont tamisés pour conserver uniquement les granulés compris entre 1.4 mm et 300 µm, comme indiqué dans le Tableau 1 ci-avant. Les particules de flux hors de cette plage ne sont pas conservées.

Lors de la fabrication des flux agglomérés, en particulier des flux de plaquage « electroslag », il est possible de faire varier la quantité de silicate liquide utilisé à l'étape de granulation en phase humide pour agglomérer les poudres. Or, la proportion de silicate liquide utilisée influence plusieurs propriétés des flux dont la répartition granulométrique, la solidité des grains et la porosité. La proportion de silicate liquide nécessaire à l'agglomération des poudres conduit soit à un collage excessif lorsque cette proportion est trop élevée, soit, à l'inverse, à un effritement trop important des granulés agglomérés lorsqu'elle est trop faible.

Partant d'un flux B de composition donnée ci-dessus, plusieurs essais de granulation avec des proportions de liant de 180 g/kg de poudre et 150 g/kg de poudre et avec des tamis de granulation dont des ouvertures de maille sont les suivantes : 1.18 mm, 1.44 mm et 1.58 mm ont été réalisés.

Une première série d'essais a été réalisée avec une proportion de liant de 180 g/kg de poudre pour le flux B. Le lot n°13 correspond au mode de fabrication actuel des flux de plaquage avec un tamis de maille égale à 1.44 mm, alors que les lots n°12 et n°14 correspondent respectivement à une granulation plus fine et plus grossière, comme donné dans le Tableau 2 ci-après.

**Tableau 2**

| Flux | Lot n° | Maille supérieure du tamis (mm) | Quantité de liant (g/kg de poudre) |
|---|---|---|---|
| B | 12 | 1.18 | 180 |
| B | 13 | 1.44 | 180 |
| B | 14 | 1.58 | 180 |

Les résultats obtenus avec les ouvertures de mailles du tamis de granulation choisies, montrent qu'une granulation fine favorise l'augmentation de la vitesse limite de plaquage.

En effet, les résultats comparatifs consignés dans le Tableau 3 ci-après, mettent en évidence qu'avec le lot n°12 dont la granulation est la plus fine, la vitesse de plaquage atteint 30 cm/min au lieu de 25 cm/min pour une granulation standard (lots n°13 et 14).

**Tableau 3**

| Lot n° | Vitesse limite de plaquage (en cm/min) |
|---|---|
| 12 | 30 |
| 13 | 25 |
| 14 | 25 |

Ces essais démontrent que pour augmenter encore la vitesse de plaquage, il convient de diminuer la taille des granulés ou particules du flux utilisé.

Une deuxième série d'essais de fabrication de flux (voir Tableau 4) a été réalisée avec le même flux B et dans les conditions du Tableau 2 précédent, mais une quantité de liant inférieure à la proportion 'normale', soit seulement 150 g/kg de poudre au lieu des 180 g/kg classiquement utilisés.

**Tableau 4**

| Flux | Lot n° | Maille tamis supérieure (en mm) | Quantité de liant g/kg de poudre |
|---|---|---|---|
| B | 9 | 1.18 | 150 |
| B | 10 | 1.44 | 150 |
| B | 11 | 1.58 | 150 |

Les résultats comparatifs obtenus lors de ces essais sont consignés dans le tableau 5 suivant.

**Tableau 5**

| Lot n° | Vitesse limite de plaquage (cm/min) |
|---|---|
| 9 | 40 |
| 10 | 35 |
| 11 | 35 |

De manière surprenante, on constate qu'avec une quantité de liant de seulement 150 g/kg, la vitesse de plaquage atteinte est supérieure à celle obtenue avec une quantité de liant de 180g/kg et ce, quelle que soit la granulométrie retenue.

Cependant, de la même manière que pour la première série d'essais, le choix d'une granulation plus fine (lot n°9) se traduit par une augmentation de la vitesse limite de plaquage par rapport aux lots n°10 et 11. Ainsi, dans les conditions de fabrication du flux du lot n°9, on peut atteindre une vitesse de 40 cm/min sans défaut de soudage.

Ces essais démontrent clairement l'intérêt et les effets bénéfiques sur la vitesse de soudage/plaquage d'une addition de titane dans le flux mais aussi du contrôle simultané de sa granulométrie et la quantité de liant qu'il renferme.

Toutefois, afin de préciser ces résultats, une analyse granulométrique a été réalisée avec une série de tamis dont les valeurs d'ouverture de maille sont données dans le Tableau 6 suivant.

**Tableau 6**

| Tamis n° | Ouverture maille (en µm) |
|---|---|
| 1 | 1600 |
| 2 | 1250 |
| 3 | 1000 |
| 4 | 800 |
| 5 | 630 |
| 6 | 500 |
| 7 | 400 |
| 8 | 315 |
| 9 | 250 |
| 10 | 125 |
| 11 | 63 |

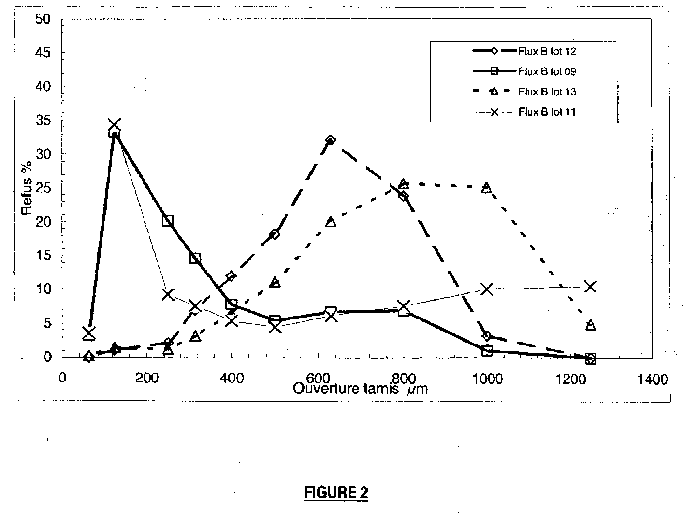

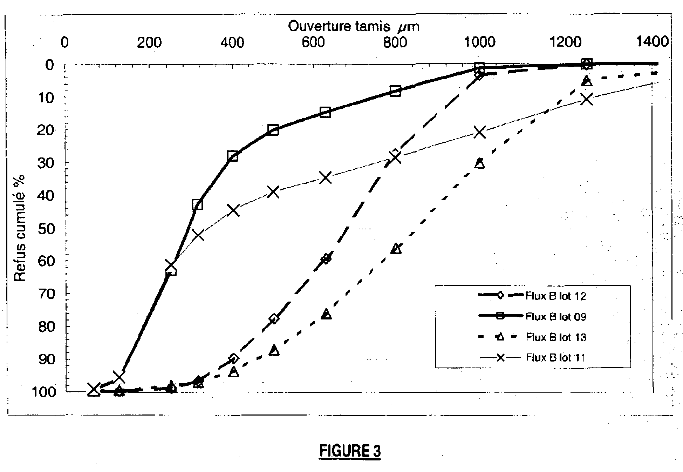

Des mesures de pourcentage de refus avec les tamis 1 à 11 du Tableau 6 ont été réalisées avec les flux des lots n° 9, 11, 12 et 13 et les résultats obtenus, consignés en Figure 2 qui est une courbe de répartition granulométrique de ces lots (% de refus en fonction de la taille de maille du tamis), montrent clairement l'influence de la quantité de liant utilisé pour la fabrication du flux sur sa répartition granulométrique. Il est également possible de représenter les résultats obtenus sous forme d'une distribution cumulative des refus de chaque tamis,comme illustré sur la Figure 3 ci-annexée.

Le % de refus étant défini comme étant une partie d'un échantillon de flux retenue sur un tamis de maille donnée.

L'analyse granulométrique par tamisage réalisée dans le cadre de la présente invention est une séparation d'un échantillon de flux par tamisage en fractions et l'expression des résultats obtenus. La séparation consiste à fractionner un échantillon de flux au moyen d'une série de tamis successifs, en plusieurs classes granulaires de tailles décroissantes. Les dimensions de l'ouverture de maille de chaque tamis, c'est-à-dire la dimension caractéristique entre deux fils consécutifs du fond du tamis, et le nombre de tamis sont choisis en fonction de la nature de l'échantillon et de la précision attendue. Les masses des différents refus, c'est-à-dire la proportion de charge retenue sur le tamis, ou tamisats sont rapportées à la masse initiale de prise d'essai et les pourcentages ainsi obtenus sont exploités, soit sous leur forme numérique, soit sous une forme graphique. La forme graphique est une courbe de distribution obtenue en inscrivant les pourcentages totaux, en masse, du refus de chaque tamis en fonction de l'ouverture correspondante, dans une série ou un jeu de tamis à ouverture décroissante. Il est également possible d'utiliser une courbe de distribution cumulative des refus.

Plus précisément, comme on le voit sur la Figure 2, plus la quantité de liant utilisé est faible, plus la proportion de produit inférieur à 400 µm est importante. Par conséquent, ces observations confirment que la vitesse de plaquage semble étroitement liée à la proportion de fines particules du flux.

Par ailleurs, le Tableau 7 suivant montre l'influence des valeurs de pourcentage de refus cumulé à 250, 400 et 800 µm sur la vitesse de plaquage avec feuillard, pour le flux B pour les lots n° 9 à 14.

**Tableau 7**

| Lot n° | Maille tamis supérieure (mm) | Quantité de liant en g/kg de flux | Vitesse de plaquage (cm/min) | Refus cumulé % | | |
|---|---|---|---|---|---|---|
| | | | | 800 µm | 400 µm | 250 µm |
| 9 | 1.18 | 150 | 40 | 8 | 28 | 63 |
| 10 | 1.44 | 150 | 35 | 23 | 42 | 61 |
| 11 | 1.58 | 150 | 35 | 28.5 | 44 | 61 |
| 12 | 1.18 | 180 | 30 | 27.2 | 90 | 99 |
| 13 | 1.44 | 180 | 25 | 48 | 94 | 98 |
| 14 | 1.58 | 180 | 25 | 56 | 93 | 98 |

Il apparaît clairement au vu de ce Tableau 7 que, plus les valeurs de refus cumulé à 400 µm et 250 µm sont faibles, plus la vitesse limite de plaquage est élevée.

Il convient donc, pour obtenir un flux efficace conduisant à une vitesse de plaquage supérieure à 20 cm/min et de préférence supérieure à 35 cm/min, de sélectionner les particules de flux de sorte que, de par leur granulométrie, elles présentent un taux de refus cumulé à 400 µm inférieur à 90% et à 250 µm inférieur à 95%.

Afin de vérifier les observations ci-dessus, il a été opéré un dépôt par procédé de type « electroslag » avec un feuillard Inconel 625 en deux couches successives sur une tôle en acier non allié de type S235 de 30 mm d'épaisseur de manière à s'assurer du respect de la classification AWS 5.14 ER NiCrMo-3, qui est la plus couramment utilisée dans ce domaine et ce, en utilisant un dispositif selon la Figure 1.

Les paramètres utilisés pour cet essai de plaquage avec le flux B et le lot n° 9 sont une intensité du courant de 1700 A, une tension de 24 V, une vitesse de plaquage de 35 cm/min, une quantité de liant égale à 150 g/kg, une granulométrie maximale de 1.2 mm avec refus cumulé pour un tamis de 250 µm inférieur à 60%. Les résultats obtenus sont donnés dans le Tableau 8 ci-après.

**Tableau 8**

| | Composition du feuillard | Composition de la première couche | Composition de la deuxième couche | Spécifications du code AWS 5.14 |
|---|---|---|---|---|
| C | 0.016 | 0.019 | 0.015 | 0.100 |
| Si | 0.22 | 0.23 | 0.33 | 0.50 |
| Mn | 0.051 | 0.097 | 0.046 | 0.500 |
| P | 0.002 | 0.0023 | 0.002 | 0.02 |
| S | 0.007 | 0.007 | 0.007 | 0.015 |
| Cr | 21.4 | 18.2 | 20.5 | 20 à 23 |
| Mo | 9.47 | 7.5 | 8.9 | 8à10 |
| Fe | 0.2 | 16.3 | 4.7 | <5 |
| V | 0.02 | 0.02 | 0.02 | ND |
| W | 0.02 | 0.02 | 0.02 | ND |
| Cu | 0.01 | 0.09 | 0.04 | 0.5 |
| Al | 0.15 | 0.03 | 0.04 | 0.4 |
| Co | 0.002 | 0.002 | 0.002 | ND |
| Nb | 3.55 | 2.59 | 2.93 | 3.15 à 4.15 |
| Ti | 0.26 | 0.07 | 0.09 | 0.4 |
| Ni | 65.1 | 54.7 | 61.8 | >58 |

Le Tableau 8 dont les compositions chimiques (en % en poids du feuillard), de la 1^{ère} couche et de la 2^{e} couche de dépôt en comparaison avec les plages de composition de la norme AWS 5.14.

Comme on le voit, la composition du dépôt obtenu (2^{e} couche) avec les paramètres choisis selon l'invention est conforme au code AWS 5.14 utilisé en référence pour notre exemple.

Par conséquent, les inventeurs de la présente invention ont montré que l'addition de Ti sous la forme de rutile et les modification des paramètres de granulation contribuent à augmenter considérablement la productivité d'un procédé de plaquage « electroslag » tout en respectant les codes de l'application concernée.

Autrement dit, pour obtenir une vitesse de plaquage élevée, il est indispensable de veiller à la fois à la composition du flux mais aussi à sa granulométrie.

## Revendications

1. Flux pour plaquage « electroslag », **caractérisé en ce qu'**il comprend de 20 à 42% de fluor (F) et de 1 à 20 % en poids de rutile (TiO₂) ou de 0,5 à 12 % de titane (Ti), et **en ce qu'**il présente une granulométrie telle qu'au moins 20 % des particules constituant le flux ont une taille inférieure à 400 µm.

2. Flux selon la revendication 1, **caractérisé en ce qu'**il présente une granulométrie telle qu'au moins 30 % des particules constituant le flux ont une taille inférieure à 400 µm.

3. Flux selon l'une des revendications 1 ou 2, **caractérisé en ce qu'**il comprend, en outre, de 25 à 40% de F, de 2.5 à 15 % de Al, de 0.5 à 8 % de Si et de 25 à 42% de Ca.

4. Flux selon l'une des revendications 1 à 3, **caractérisé en ce qu'**il comprend de 5 à 12 % de Al, de 2 à 6 % de Si et de 28 à 38 % de Ca.

5. Flux selon l'une des revendications 1 à 4, **caractérisé en ce qu'**il comprend de 2 à 15 % de TiO₂, de préférence plus de 3 % de TiO₂.

6. Flux selon l'une des revendications 1 à 5, **caractérisé en ce qu'**il comprend, en outre, moins de 3 % d'un ou plusieurs éléments choisis parmi Na, K et Li.

7. Flux selon l'une des revendications 1 à 6, **caractérisé en ce qu'**il présente une granulométrie telle que de 35 à 75 % des particules constituant le flux ont une taille inférieure à 400 µm.

8. Flux selon l'une des revendications 1 à 7, **caractérisé en ce qu'**il présente une granulométrie telle qu'au moins 5 % des particules constituant le flux ont une taille inférieure à 250 µm, de préférence au moins 15% des particules constituant le flux ont une taille inférieure à 250 µm, de préférence encore de 25 à 50 % des particules constituant le flux ont une taille inférieure à 250 µm.

9. Flux selon l'une des revendications 1 à 8, **caractérisé en ce qu'**il présente une granulométrie telle qu'au moins 70 % des particules constituant le flux ont une taille inférieure à 800 µm.

10. Procédé de plaquage à l'arc de type « electroslag » mettant en oeuvre un feuillard d'apport et un flux de plaquage selon l'une des revendications 1 à 9.

11. Procédé de plaquage selon la revendication 10, **caractérisé en ce qu'**il est mis en oeuvre à une vitesse de plaquage d'au moins 25 cm/min, de préférence d'au moins 30 cm/min.

12. Procédé de fabrication d'un flux selon l'une des revendications 1 à 9, comprenant une étape de granulation en phase humide, durant laquelle on mélange un liant contenant au moins un silicate à l'état liquide avec au moins une matière pulvérulente de manière à former des particules de flux agglomérées, **caractérisé en ce qu'**on utilise une quantité de liant inférieure à 175 g/kg de matière pulvérulente, de préférence inférieure à 160 g/kg de matière pulvérulente, de préférence encore de l'ordre de 150 g/kg de matière pulvérulente.

13. Procédé de fabrication selon la revendication 12, **caractérisé en ce que** la matière pulvérulente contient de 1 à 20 % en poids de rutile (TiO₂).

14. Procédé de fabrication selon l'une des revendication 12 ou 13, **caractérisé en ce qu'**il comporte, en outre :
- une étape d'agglomération des matières pulvérulentes de manière à former des particules de flux agglomérées, et
- une étape de tamisage desdites particules de flux agglomérées de manière à obtenir un flux présentant une répartition granulométrique telle qu'au moins 20 % des particules constituant ledit flux ont une taille inférieure à 400 µm.

## Patentansprüche

1. Fluss für Elektroslagüberzug, **dadurch gekennzeichnet, dass** er 20 bis 42 % Fluor (F) und 1 bis 20 Gew.% Rutil (TiO₂) oder 0,5 bis 12 % Titan (Ti) umfasst, und dadurch, dass er eine derartige Granulometrie aufweist, dass mindestens 20 % der Partikel, die den Fluss bilden, eine Größe von weniger als 400 µm haben.

2. Fluss nach Anspruch 1, **dadurch gekennzeichnet, dass** er mindestens eine derartige Granulometrie aufweist, dass mindestens 30 % der Partikel, die den Fluss bilden, eine Größe von weniger als 400 µm haben.

3. Fluss nach einem der Ansprüche 1 oder 2, **dadurch gekennzeichnet, dass** er außerdem 25 bis 40 % F, 2,5 bis 15 % Al, 0,5 bis 8 % Si und 25 bis 42 % Ca umfasst.

4. Fluss nach einem der Ansprüche 1 bis 3, **dadurch gekennzeichnet, dass** er 5 bis 12 % Al, 2 bis 6 % Si und 28 bis 38 % Ca umfasst.

5. Fluss nach einem der Ansprüche 1 bis 4, **dadurch gekennzeichnet, dass** er 2 bis 15 % TiO₂, vorzugsweise mehr als 3 % de TiO₂ umfasst.

6. Fluss nach einem der Ansprüche 1 bis 5, **dadurch gekennzeichnet, dass** er außerdem weniger als 3 % eines oder mehrerer Elemente umfasst, ausgewählt aus Na, K und Li.

7. Fluss nach einem der Ansprüche 1 bis 6, **dadurch gekennzeichnet, dass** er eine derartige Granulometrie aufweist, dass 35 bis 75 % der Partikel, die den Fluss bilden, eine Größe von weniger als 400 µm haben.

8. Fluss nach einem der Ansprüche 1 bis 7, **dadurch gekennzeichnet, dass** er eine derartige Granulometrie aufweist, dass mindestens 5 % der Partikel, die den Fluss bilden, eine Größe von weniger als 250 µm haben, vorzugsweise mindestens 15 % der Partikel, die den Fluss bilden, eine Größe von weniger als 250 µm haben, noch bevorzugter 25 bis 50 % der Partikel, die den Fluss bilden, eine Größe von weniger als 250 µm haben.

9. Fluss nach einem der Ansprüche 1 bis 8, **dadurch gekennzeichnet, dass** er eine derartige Granulometrie aufweist, dass mindestens 70 % der Partikel, die den Fluss bilden, eine Größe von weniger als 800 µm haben.

10. Verfahren zum Überzug vom Typ "Elektroslag", der ein Auftragsbandmaterial und einen Überzugsfluss nach einem der Ansprüche 1 bis 9 anwendet.

11. Verfahren nach Anspruch 10, **dadurch gekennzeichnet, dass** es mit einer Überzugsgeschwindigkeit von mindestens 25 cm/min, vorzugsweise mindestens 30 cm/min angewendet wird.

12. Verfahren zur Herstellung eines Flusses nach einem der Ansprüche 1 bis 9, umfassend einen Schritt des Granulierens im feuchten Zustand, während dessen ein Bindemittel mit mindestens einem Silikat im flüssigen Zustand mit mindestens einem pulverförmigen Material gemischt wird, um agglomerierte Flusspartikel zu bilden, **dadurch gekennzeichnet, dass** eine Menge Bindemittel von weniger als 175 g/kg pulverförmiges Material verwendet wird, vorzugsweise weniger als 160 g/kg pulverförmiges Material. noch bevorzugter im Bereich von 150 g/kg pulverförmiges Material.

13. Verfahren nach Anspruch 12, **dadurch gekennzeichnet, dass** das pulverförmige Material 1 bis 20 Gew.% Rutil (TiO₂) enthält.

14. Verfahren nach einem der Ansprüche 12 oder 13, **dadurch gekennzeichnet, dass** es außerdem Folgendes umfasst:
- einen Schritt des Agglomerierens der pulverförmigen Materialien, um agglomerierte Flusspartikel zu bilden, und
- einen Schritt des Siebens der agglomerierten Flussartikel, um einen Fluss zu erhalten, der eine derartige granulometrische Verteilung aufweist, dass mindestens 20 % der Partikel, die den Fluss bilden, eine Größe von weniger als 400 µm haben

## Claims

1. Flux for "electroslag" cladding, **characterised in that** it comprises 20 to 42% fluorine (F) and 1 to 20% by weight of rutile (TiO₂) or 0.5 to 12% titanium (Ti), and **in that** it has a particle size distribution such that at least 20% of the particles forming the flux have a size less than 400 µm.

2. Flux according to claim 1, **characterised in that** it has a particle size distribution such that at least 30% of the particles forming the flux have a size less than 400 µm.

3. Flux according to any of the claims 1 or 2, **characterised in that** it further comprises 25 to 40% F, 2.5 to 15% Al, 0.5 to 8% Si and 25 to 42% Ca.

4. Flux according to any of claims 1 to 3, **characterised in that** it comprises 5 to 12% Al, 2 to 6% Si and 28 to 38% Ca.

5. Flux according to any of claims 1 to 4, **characterised in that** it comprises 2 to 15% TiO₂, preferably more than 3% TriO₂.

6. Flux according to any of claims 1 to 5, **characterised in that** it further comprises less than 3% of one or a plurality of elements chosen from Na, K and Li.

7. Flux according to any of claims 1 to 6, **characterised in that** it has a particle size distribution such that 35 to 75% of the particles forming the flux have a size less than 400 µm.

8. Flux according to any of claims 1 to 7, **characterised in that** it has a particle size distribution such that at least 5% of the particles forming the flux have a size less than 250 µm, preferably at least 15% of the particles forming the flux have a size less than 250 µm, more preferably 25 to 50% of the particles forming the flux have a size less than 250 µm.

9. Flux according to any of claims 1 to 8, **characterised in that** it has a particle size distribution such that at least 70% of the particles forming the flux have a size less than 800 µm.

10. "Electroslag" type arc cladding method using a feed strip and a cladding flux according to any of claims 1 to 9.

11. Cladding method according to claim 10, **characterised in that** it is implemented at a cladding rate of at least 25 cm/min, preferably at least 30 cm/min.

12. Method for manufacturing a flux according to any of claims 1 to 9, comprising a wet-phase granulation step, during which a binder containing at least one silicate in the liquid state is mixed with at least one powder material so as to form agglomerated flux particles, **characterised in that** a quantity of binder less than 175 g/kg of powder material, preferably less than 160 g/kg of powder material, more preferably in the region of 150 g/kg of powder material, is used.

13. Manufacturing method according to claim 12, **characterised in that** the powder material contains 1 to 20% by weight of rutile (TiO₂).

14. Manufacturing method according to any of claims 12 or 13, **characterised in that** it further comprises:
- a step for agglomerating the powder materials so as to form agglomerated flux particles, and
- a step for screening said agglomerated flux particles so as to obtain a flux having a particle size distribution such that at least 20% of the particles forming the flux have a size less than 400 µm.
